(19) Europäisches Patentamt
European Patent Office
Office européen des brevets

(11) **EP 3 265 346 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **15804822.3**

(22) Anmeldetag: **07.12.2015**

(51) Int Cl.:
***B60S 5/04*** (2006.01)

(86) Internationale Anmeldenummer:
**PCT/EP2015/078752**

(87) Internationale Veröffentlichungsnummer:
**WO 2016/138973 (09.09.2016 Gazette 2016/36)**

(54) **TRAGBARE KOMPRESSOR-EINRICHTUNG**

PORTABLE COMPRESSOR DEVICE

DISPOSITIF COMPRESSEUR PORTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2015 DE 102015203970**

(43) Veröffentlichungstag der Anmeldung:
**10.01.2018 Patentblatt 2018/02**

(73) Patentinhaber: **Continental Reifen Deutschland GmbH**
**30165 Hannover (DE)**

(72) Erfinder:
• **DETERING, Rainer**
**31535 Neustadt am Rbge. (DE)**
• **ZAUM, Christopher**
**30926 Seelze (DE)**
• **HUANG, Danqing**
**65760 Eschborn (DE)**
• **BIALACH, Philip Mathias**
**30659 Hannover (DE)**

(74) Vertreter: **Kilsch, Armin Ralph**
**Continental Aktiengesellschaft**
**Patente und Lizenzen**
**Postfach 169**
**30001 Hannover (DE)**

(56) Entgegenhaltungen:
**US-B1- 6 705 360    US-B1- 7 789 112**

**Beschreibung**

Die Erfindung betrifft ein tragbare Kompressor-Einrichtung zum Aufpumpen von Kraftfahrzeugreifen, wobei die Kompressor-Einrichtung einen elektrisch angetriebenen Kompressor als Druckgasquelle und eine Druckgasleitung aufweist, mit der der Kompressor mit einem Einlass bzw. Einlassventil des Kraftfahrzeugreifens verbindbar ist, sowie Mittel zur Energiezufuhr, insbesondere Stecker, Elektrokabel oder auch Batterien, und Bedienungs- und Anzeigeelemente für den Betrieb der Einrichtung aufweist, wobei die Kompressor-Einrichtung mindestens ein Befestigungsmittel aufweist, mit dessen Hilfe die Kompressor-Einrichtung im Betriebszustand an einem Fahrzeug temporär befestigbar ist.

Die US 7 789112 B1 offenbart eine gattungsgemäße tragbare Kompressor-Einrichtung. Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muss der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, dass die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann. Die Reparatursätze / Pannensets sind typischerweise im Kofferraum eines Fahrzeugs untergebracht.

Handelsübliche Pannensets zur Reifenabdichtung, die einen Kleinkompressor enthalten, können in zwei Systeme unterteilt werden.

Es gibt einerseits Systeme, bei denen das Abdichtmittel mit Hilfe des Kompressors durch den Reifenventileinsatz gepumpt und danach ohne Unterbrechung der Reifen mit Luft gefüllt wird. Andererseits gibt es Systeme, bei denen zunächst allein Dichtmittel in den Reifen eingefüllt wird. Nachdem das Dichtmittel in den Reifen gedrückt wurde, etwa mit Hilfe einer verformbaren Flasche (Quetsch-Flasche), wird der Reifenventileinsatz wieder eingeschraubt, bevor in einem zweiten Schritt der Kompressor am Reifenventil angeschlossen und der Reifen mit Luft befüllt wird. Üblicherweise stehen dabei Teile des Systems, insbesondere der Kompressor, auf dem Boden neben dem Reifen und sind mit einem ausreichend langen, druckfesten Schlauch mit dem Reifenventil verbunden.

Es ist bei beiden Systemen darauf zu achten, dass während der Benutzung alle relevanten Systeminformationen (z. B. Druckanzeige) benutzerfreundlich zur Verfügung gestellt werden.

Wenn solche Reparatursätze gebraucht werden, befindet sich der Nutzer in ungewohnter und ungeübter Situation. Die einzelnen Zubehörteile solcher Reparatursätze müssen daher "zur Hand" sein und in einer Weise miteinander verbunden oder zusammengestellt sein, die sicherstellt, dass alle Funktionsteile sich am richtigen und zum Betrieb vorgesehen Platz befinden und miteinander wirken können. Das ist nicht ganz problemlos zu gewährleisten, insbesondere dann, wenn je nach Betriebszustand zunächst Dichtmittelbehälter und diverse Schlauchverbindungen angeschlossen oder umgebaut werden müssen. Oft werden auch Systemteile verlegt, vergessen oder falsch angeschlossen.

Zur Erleichterung der Handhabung der Geräte/Reparatursätze offenbart die EP 1914062 A1 einen Reparatursatz zum Abdichten und Aufpumpen aufblasbarer Gegenstände, der mindestens ein Befestigungsmittel aufweist, mit dessen Hilfe die Einrichtung im Betriebszustand an einem Fahrzeug temporär befestigbar ist. Damit erhält man eine Verbindung zwischen den wichtigsten Bauteilen/Zubehörteilen, so dass alle Zubehörteile des Pannenhilfesets sich beim Einsatz zusammen und am richtigen Platz befinden.

Nun ist der augenblickliche Trend zu größeren Reifenabmessungen diametral zum Trend bei Pannensets, die immer kleiner und kostengünstiger werden. Einer der Zielkonflikte bei der Konstruktion kleiner Pannensets ist u.a. die Länge des Schlauches sowie die Packmaße zum Verstauen des Pannensets im Fahrzeug. Ein besonders kleiner Kompressor benötigt, wenn er auf der Erde neben dem Reifen betrieben werden soll, ein langen und flexiblen Schlauch, was eben gerade die Packmaße erhöht und ungewünscht ist.

Für die Erfindung bestand also die Aufgabe, für solche Systeme, bei denen zunächst separat Dichtmittel in den Reifen eingefüllt und danach erst ein Kompressor angeschlossen und der Reifen mit Luft befüllt wird, eine tragbare Kompressor-Einrichtung bereitzustellen, die kleine Packmaße aufweist, die sicher, einfach und möglichst bedienungsfreundlich zu handhaben ist, eine robuste Ausführung aufweist und dazu einfach und preisgünstig herzustellen ist.

Gelöst wird diese Aufgabe durch die Merkmale des Hauptanspruchs. Weitere vorteilhafte Ausbildungen sind in den Unteransprüchen offenbart.

Dabei ist die Kompressor-Einrichtung mit Hilfe einer lösbaren mechanischen Verbindung am Einlass bzw. Einlassventil eines Kraftfahrzeugreifens hängend befestigt, nämlich so, dass ein Bodenkontakt der Kompressor-Einrichtung, d.h. ein Kontakt mit dem Untergrund, auf dem der Reifen abrollt oder steht, vermieden wird. Die Kompressor-Einrichtung "hängt" dann am Reifenventil und ist dadurch unabhängig vom Fahrbahnuntergrund eingesetzt werden, kann z.B. bei unebenem oder schlammigem Seitenstreifen ohne weiteres verwendet werden, und es müssen keine separaten Schlauchverbindungen angeschlossen oder umgebaut werden. Der Bediener kann also ohne große Vorbereitungen den Kompressor einsetzen, indem er ihn lediglich mit dem Reifenventil verbindet. Eine vorteilhafte Ausbildung besteht darin, dass nach der Befestigung eine betriebsbereite Ausrichtung der Kompressor-Einrichtung auch dann vorhanden ist, wenn kein Kontakt der Kompressor-Einrichtung mit dem Untergrund besteht. Unter dem Begriff" betriebsbereite Ausrichtung" versteht man in diesem Zusammenhang ein Zustand, bei der alle Funktionen der Kompressor-Einrichtung mindestens für den zur Durchführung der Funktion nötigen Zeitraum gewährleistet sind, d.h. zum Beispiel für den Zeitraum, den das Aufpumpen eines Reifens erfordert. Die betriebsbereite Ausrichtung ist auch dann gewährleistet, wenn kein Kontakt der Kompressor-Einrichtung mit dem Untergrund besteht.

Die Verbindung des Kompressors mit dem Fahrzeug bzw. dem Einlassventil kann dabei mit üblichen Verbindungsmitteln, wie etwa Schlaufen oder Haken direkt am Ventil erfolgen, oder auch, wie es in einer vorteilhaften Weiterbildung vorgesehen ist, mit Hilfe einer Druckgas leitenden, lösbaren mechanischen Verbindung zwischen Druckgasleitung und Einlass bzw. Einlassventil am Fahrzeugreifen. Damit ist in einfachster Weise eine mechanische und pneumatische Verbindung gleichzeitig entstanden.

Nach der Erfindung ist die Druckgasleitung mindestens teilweise als Schlauchstück ausgebildet und ist die lösbare mechanische Verbindung als an dem Schlauchstück befindliche Schraubkappe zur Verbindung des Schlauchstücks mit dem Einlassventil ausgebildet. Damit wird eine leicht zu bedienende und auch allseits bekannte Art der Verbindung auch für dieses System bereitgestellt, so dass der Bediener keine Schwierigkeiten vor sich sieht, wenn er das System mit dem Reifenventil verbinden will. Auch hier dient die Kompressorverbindung neben der pneumatischen Verbindung auch als mechanische Verbindung, wobei der leicht und klein gebaute Kompressor über den Schlauch direkt am Reifenventil hängt. Der Schlauch ist dabei deutlich kürzer als im Stand der Technik, nämlich vorzugsweise nur zwischen 1 und 25 cm lang.

Natürlich können auch beide vorteilhaften Ausbildungen der Verbindung nebeneinander existieren, also beispielsweise eine Verbindung über einen Schlauch, wobei ein Schraubverschluss am Schlauch kombiniert ist mit einer Schlaufe zur Aufhängung des Kompressors am Ventilanschluss.

Eine weitere vorteilhafte Ausbildung besteht darin, dass die Anordnung der mechanischen Verbindung so ausgebildet ist, dass nach deren Befestigung am Einlass bzw. Einlassventil die Kompressor-Einrichtung eine Lage einnimmt, bei der die Bedienungs- und Anzeigeelemente zur Bedienerseite zeigen. So kann beispielsweise ein besonders kurzes Schlauchstück oder auch ein Rohrstutzen auf der Rückseite des Kompressors, welches/welcher mit einer zur Verbindung mit dem Ventil geeigneten Schraubkappe versehen ist, dafür sorgen, dass die mit Bedienungselementen versehene Vorderseite des Kompressorgehäuses sich auf der "richtige" Seite, nämlich auf der Bedienerseite befindet, welche ja üblicherweise nahe der Reifenaußenseite ist, da sich der Bediener ja auf einer Stelle vor dem Reifen bzw. vor der Felge befindet. Damit ist mit ausgesprochen einfachen Mitteln die richtige Lage zum Betrieb der Kompressor-Einrichtung festgelegt.

Eine weitere vorteilhafte Ausbildung besteht darin, dass die lösbare Verbindung eine bewegliche oder flexible Kupplung aufweist, vorzugsweise eine Drehkupplung, und der Schwerpunkt der Kompressor-Einrichtung so ausgebildet ist, dass nach deren Befestigung am Einlass bzw. Einlassventil die Kompressor-Einrichtung eine Lage einnimmt, bei der die Bedienungs- und Anzeigeelemente zur Bedienerseite zeigen. Im einfachsten Fall dreht und pendelt der Kompressor nach Anschluss an das Reifenventil um Letzteres bzw. den Schlauch als flexiblen Drehpunkt nach unten und richtet sich so aus, dass die Bedienungselemente auch auf der Bedienerseite sind und der Bediener gegebenenfalls nur leichte Korrekturen vornehmen muss, um die beste Position zur Bedienung zu erreichen.

In eben dieser Weise oder auch unterstützend wirkt eine weitere vorteilhafte Ausbildung, die darin besteht, dass die lösbare Verbindung eine bewegliche oder flexible Kupplung aufweist, vorzugsweise eine Drehkupplung, und die Formgebung des Gehäuses der Kompressor-Einrichtung so ausgebildet ist, dass nach deren Befestigung am Einlass bzw. Einlassventil die Kompressor-Einrichtung eine Lage einnimmt, bei der die Bedienungs- und Anzeigeelemente zur Bedienerseite zeigen.

Neben den Vorteilen bei der Bedienung stellt die erfindungsgemäße Kompressor- Einrichtung ein kleineres, leichteres, kostengünstigeres Design bereit, reduziert durch einen kürzeren Schlauch den Platzbedarf und das Kompressorgehäuse, weist ein geringeres Gesamtgewicht auf und stellt Einsparungen bei den Herstellkosten bereit. Ein verkürzter Schlauch ermöglicht durch eine sehr platzsparende Bauweise neue Möglichkeiten zum Lagern des Kompressors im Fahrzeug, z.B. unterhalb der Fahrzeugsitze.

Anhand eines Ausführungsbeispiels soll die Erfindung näher erläutert werden.

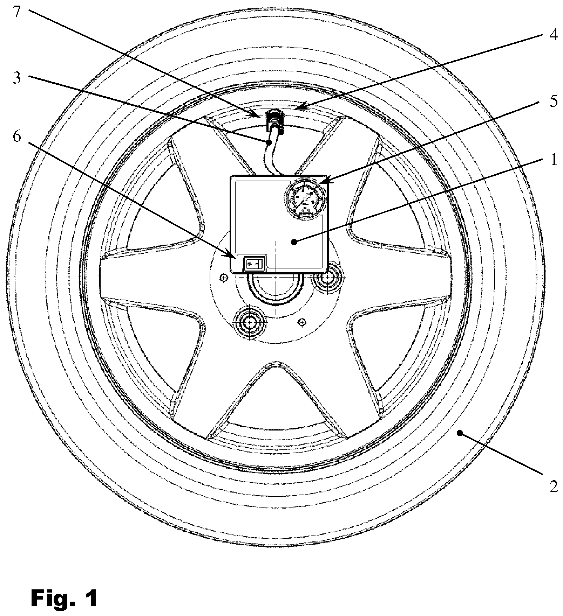

Fig. 1 zeigt eine tragbare Kompressor-Einrichtung 1 zum Aufpumpen eines auf eine Felge aufgezogenen Kraftfahrzeugreifens 2, wobei die Kompressor-Einrichtung einen hier nicht im Detail näher dargestellten elektrisch angetriebenen Kompressor als Druckgasquelle und eine in Teilbereichen als kurzes Schlauchstück 3 ausgebildete Druckgasleitung aufweist, mit der der Kompressor bzw. die Kompressor-Einheit mit einem Einlass bzw. Einlassventil 4 des Reifens verbindbar ist.

Die Kompressor-Einrichtung 1 weist weiterhin Mittel zur Energiezufuhr auf, hier ebenfalls nicht näher dargestellt, und Bedienungs- und Anzeigeelemente 5, 6 für den Betrieb der Einrichtung. Die Kompressor-Einrichtung 1 besitzt als temporär betätigbare lösbare mechanisch-pneumatische Verbindung zum Fahrzeugreifen bzw. zum Reifenventil eine am Ende der Druckgasleitung, d.h. am Schlauchstück 3 angeordnete Schraubkappe 7 zur Verbindung des Schlauchstücks 3 mit dem Einlassventil 4.

Damit hängt bei dem entsprechend kurz ausgebildeten Schlauch 3 die Kompressor- Einrichtung 1 so an dem Reifenventil, dass in fast jeder Stellung des Reifens ein Kontakt der Einrichtung mit dem Untergrund vermieden wird.

Die Anordnung der mechanisch-pneumatischen Verbindung ist dabei so ausgebildet, dass nach deren Befestigung am Einlass bzw. Einlassventil 4 die Kompressor-Einrichtung 1 eine Lage einnimmt, bei der die Bedienungs- und Anzeigeelemente 5, 6 zur Bedienerseite zeigen.

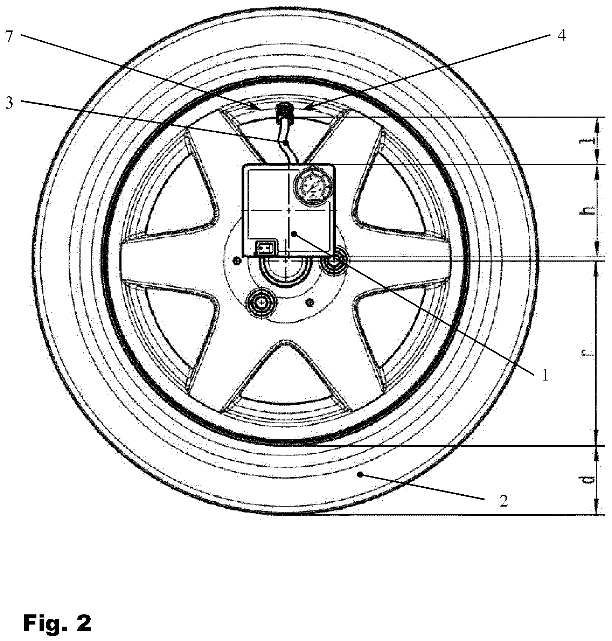

Fig. 2 zeigt im Detail die besonders vorteilhafte Konstruktion der Kompressor-Einrichtung dahingehend, dass die Länge 1 der lösbaren mechanischen Verbindung gemäß der Formel

$$d - h < l < 2r + d - h$$

ausgebildet ist, wobei d die Seitenwandhöhe des Fahrzeugreifens ist, h die Höhe der Kompressoreinrichtung und r der Felgenradius des Rades. Damit wird erreicht, dass in fast allen Stellungen dass des Rades bzw. des Ventileinlasses oder Reifenventil die Kompressor-Einrichtung hängend positioniert ist und selbst in der untersten Stellung des Ventils mindestens schräg hängend vor der Reiefenseitenwand positioniert ist und nicht auf dem Untergrund aufstehen muss.

Die hier gezeigte Kompressor-Einrichtung weist vorteilhafterweise ein Gesamtgewicht von unter 1 kg auf und ist somit leicht genug um ohne Auswirkungen auf die Festigkeit des Ventils an Letzteren hängend angeordnet zu werden.

Vorteilhafterweise weist das Gehäuse der Kompressor-Einrichtung hier nicht näher dargestellte Be- und Entlüftungslöcher seitlich zur und unter der Bedienfläche auf, die in Bezug auf die während des Betriebes hängenden Position der Kompressor-Einrichtung so angeordnet sind, dass Regenwasser nicht oder nur in geringem Umfang ins Gehäuse eintreten kann.

**Bezugszeichenliste**

(Teil der Beschreibung)

1    Kompressor-Einrichtung
2    Kraftfahrzeugreifen
3    Schlauchstück
4    Einlassventil des Reifens
5    Bedienungs- und Anzeigeelement
6    Bedienungs- und Anzeigeelement
7    Schraubkappe

**Patentansprüche**

1.   Tragbare Kompressor-Einrichtung (1) zum Aufpumpen von Fahrzeugreifen, wobei die Kompressor-Einrichtung einen elektrisch angetriebenen Kompressor als Druckgasquelle und eine Druckgasleitung aufweist, mit der der Kompressor mit einem Einlass bzw. Einlassventil (4) des Kraftfahrzeugreifens verbindbar ist, sowie Mittel zur Energiezufuhr, insbesondere Stecker und Elektrokabel, und Bedienungs- und Anzeigeelemente (5, 6) für den Betrieb der Einrichtung aufweist, wobei die Kompressor-Einrichtung (1) mindestens ein Befestigungsmittel aufweist, mit dessen Hilfe die Kompressor-Einrichtung im Betriebszustand an einem Fahrzeug temporär befestigbar ist, wobei die temporäre Befestigung mit Hilfe einer Druckgas leitenden, lösbaren mechanischen Verbindung zwischen Druckgasleitung und Einlass bzw. Einlassventil am Fahrzeugreifen erfolgt und die Druckgasleitung mindestens teilweise als Schlauchstück (3) ausgebildet ist, **dadurch gekennzeichnet, dass** die lösbare mechanische Verbindung als an dem Schlauchstück befindliche Schraubkappe (7) zur Verbindung des Schlauchstücks (3) mit dem Einlassventil (4) so ausgebildet ist, dass die Kompressor-Einrichtung mit Hilfe der lösbaren mechanischen Verbindung am Einlass bzw. Einlassventil (4) des Fahrzeugreifens (2) hängend und ohne Kontakt zum Untergrund in einer betriebsbereiten Ausrichtung befestigbar ist.

**2.** Kompressor-Einrichtung nach Anspruch 1, bei der die Anordnung der mechanischen Verbindung so ausgebildet ist, dass nach deren Befestigung am Einlass bzw. Einlassventil (4) die Kompressor-Einrichtung (1) eine Lage einnimmt, bei der die Bedienungs- und Anzeigeelemente (5, 6) zur Bedienerseite zeigen.

**3.** Kompressor-Einrichtung nach Anspruch 1 oder 2, bei der die lösbare Verbindung eine bewegliche oder flexible Kupplung aufweist, vorzugsweise eine Drehkupplung, und der Schwerpunkt der Kompressor-Einrichtung so ausgebildet ist, dass nach deren Befestigung am Einlass bzw. Einlassventil (4) die Kompressor-Einrichtung (1) eine Lage einnimmt, bei der die Bedienungs- und Anzeigeelemente (5, 6) zur Bedienerseite zeigen.

**4.** Kompressor-Einrichtung nach einem der Ansprüche 1 bis 3, bei der die lösbare Verbindung eine bewegliche oder flexible Kupplung aufweist, vorzugsweise eine Drehkupplung, und die Formgebung eines Gehäuses der Kompressor-Einrichtung (1) so ausgebildet ist, dass nach deren Befestigung am Einlass bzw. Einlassventil (4) die Kompressor-Einrichtung eine Lage einnimmt, bei der die Bedienungs- und Anzeigeelemente (5, 6) zur Bedienerseite zeigen

**5.** Kompressor-Einrichtung nach einem der Ansprüche 1 bis 4, bei der die Länge 1 der lösbaren mechanischen Verbindung gemäß folgender Formel ausgebildet ist

$$d - h < l < 2r + d - h,$$

wobei d die Seitenwandhöhe des Fahrzeugreifens ist, h die Höhe der Kompressor-Einrichtung und r der Felgenradius des Rades.

**6.** Kompressor-Einrichtung nach einem der Ansprüche 1 bis 5, dessen Gesamtgewicht kleiner als 1,5 kg ist, vorzugsweise kleiner als 1 kg.

**7.** Kompressor-Einrichtung nach einem der Ansprüche 1 bis 6, bei der das Gehäuse der Kompressor-Einrichtung Be- und Entlüftungslöcher aufweist, die in Bezug auf die während des Betriebes hängenden Position der Kompressor-Einrichtung so angeordnet sind, dass Regenwasser nicht ins Gehäuse eintreten kann, wobei die Be- und Entlüftungslöcher vorzugsweise seitlich zur oder unter der Bedienfläche angeordnet sind.

**8.** Kompressor-Einrichtung nach einem der Ansprüche 1 bis 7, bei der die betriebsbereite Ausrichtung ohne die Verwendung von Standfüßen gewährleistet ist.

## Claims

**1.** Portable compressor device (1) for pumping up vehicle tyres, wherein the compressor device has an electrically driven compressor as a pressurized-gas source and a pressurized-gas line by way of which the compressor is able to be connected to an inlet or inlet valve (4) of the motor vehicle tyre, and has means for the supply of energy, in particular plugs and electrical cables, and operating and display elements (5, 6) for the operation of the device, wherein the compressor device (1) has at least one fastening means, with the aid of which the compressor device is, in the operating state, able to be temporarily fastened to a vehicle, wherein the temporary fastening is realized with the aid of a releasable mechanical connection, conducting pressurized gas, between the pressurized-gas line and the inlet or inlet valve at the vehicle tyre, and the pressurized-gas line is formed at least partially as a hose piece (3), **characterized in that** the releasable mechanical connection is formed as a screw-type cap (7), situated on the hose piece, for the connection of the hose piece (3) to the inlet valve (4), such that, with the aid of the releasable mechanical connection, the compressor device is able to be fastened in an operationally ready orientation to the inlet or inlet valve (4) of the vehicle tyre (2) in a manner hanging and without contact with the underlying surface.

**2.** Compressor device according to Claim 1, in which the arrangement of the mechanical connection is formed such that, after it has been fastened to the inlet or inlet valve (4), the compressor device (1) assumes a position in which the operating and display elements (5, 6) point towards the operator side.

**3.** Compressor device according to Claim 1 or 2, in which the releasable connection has a movable or flexible coupling, preferably a rotary coupling, and the centre of gravity of the compressor device is formed such that, after it has been fastened to the inlet or inlet valve (4), the compressor device (1) assumes a position in which the operating and display elements (5, 6) point towards the operator side.

**4.** Compressor device according to one of Claims 1 to 3, in which the releasable connection has a movable or flexible coupling, preferably a rotary coupling, and the shaping of a housing of the compressor device (1) is formed such that, after it has been fastened to the inlet or inlet valve (4), the compressor device assumes a position in which the operating and display elements (5, 6) point towards the operator side.

**5.** Compressor device according to one of Claims 1 to 4, in which the length 1 of the releasable mechanical connection is formed according to the following for-

mula

$$d - h < l < 2r + d - h,$$

where d is the side-wall height of the vehicle tyre, h is the height of the compressor device and r is the rim radius of the wheel.

6. Compressor device according to one of Claims 1 to 5, whose total weight is less than 1.5 kg, preferably less than 1 kg.

7. Compressor device according to one of Claims 1 to 6, in which the housing of the compressor device has aeration and venting holes which, with respect to the position hanging during operation of the compressor device, are arranged such that rainwater cannot enter the housing, wherein the aeration and venting holes are preferably arranged to the side of or under the operating surface.

8. Compressor device according to one of Claims 1 to 7, in which the operationally ready orientation is ensured without the use of supporting feet.

**Revendications**

1. Dispositif de compresseur portable (1) pour le gonflage de pneumatiques de véhicules, dans lequel le dispositif de compresseur présente un compresseur à entraînement électrique comme source de gaz comprimé et une conduite de gaz comprimé, avec laquelle le compresseur peut être raccordé à une entrée ou une soupape d'entrée (4) du pneumatique de véhicule, et présente aussi des moyens d'alimentation en énergie, en particulier des connecteurs et un câble électrique, et des éléments de commande et d'affichage (5, 6) pour le fonctionnement du dispositif, dans lequel le dispositif de compresseur (1) présente au moins un moyen de fixation, à l'aide duquel le dispositif de compresseur peut être fixé temporairement en état de fonctionnement à un véhicule, dans lequel la fixation temporaire est effectuée à l'aide d'un assemblage mécanique détachable, transportant un gaz comprimé, entre la conduite de gaz comprimé et l'entrée ou la soupape d'entrée sur le pneumatique de véhicule et la conduite de gaz comprimé est réalisée au moins en partie sous la forme d'un morceau de tuyau flexible (3), **caractérisé en ce que** l'assemblage mécanique détachable est réalisé sous la forme d'un capuchon à visser (7) se trouvant sur le morceau de tuyau flexible pour le raccordement du morceau de tuyau flexible (3) à la soupape d'entrée (4), de telle manière que le dispositif de compresseur puisse être fixé à l'aide de l'assemblage mécanique détachable à l'entrée ou à la soupape d'entrée (4) du pneumatique de véhicule (2) de façon suspendue et sans contact avec le support dans une orientation prête à fonctionner.

2. Dispositif de compresseur selon la revendication 1, dans lequel l'agencement de l'assemblage mécanique est configuré de telle manière qu'après sa fixation à l'entrée ou à la soupape d'entrée (4) le dispositif de compresseur (1) occupe une position, dans laquelle les éléments de commande et d'affichage (5, 6) sont orientés vers le côté de l'opérateur.

3. Dispositif de compresseur selon la revendication 1 ou 2, dans lequel l'assemblage détachable présente un couplage mobile ou flexible, de préférence un couplage rotatif, et le centre de gravité du dispositif de compresseur est configuré de telle manière qu'après sa fixation à l'entrée ou à la soupape d'entrée (4) le dispositif de compresseur (1) occupe une position, dans laquelle les éléments de commande et d'affichage (5, 6) sont orientés vers le côté de l'opérateur.

4. Dispositif de compresseur selon l'une quelconque des revendications 1 à 3, dans lequel l'assemblage détachable présente un couplage mobile ou flexible, de préférence un couplage rotatif, et la forme d'un boîtier du dispositif de compresseur (1) est réalisée de telle manière qu'après sa fixation à l'entrée ou à la soupape d'entrée (4) le dispositif de compresseur (1) occupe une position, dans laquelle les éléments de commande et d'affichage (5, 6) sont orientés vers le côté de l'opérateur.

5. Dispositif de compresseur selon l'une quelconque des revendications 1 à 4, dans lequel la longueur l de l'assemblage mécanique détachable est réalisée selon la formule suivante

$$d\text{-}h < l < 2r\text{+}d\text{-}h,$$

dans laquelle d est la hauteur du flanc du pneumatique, h est la hauteur du dispositif de compresseur et r est le rayon de la jante de la roue.

6. Dispositif de compresseur selon l'une quelconque des revendications 1 à 5, dont le poids total est inférieur à 1,5 kg, de préférence inférieur à 1 kg.

7. Dispositif de compresseur selon l'une quelconque des revendications 1 à 6, dans lequel le boîtier du dispositif de compresseur présente des trous d'entrée et de sortie d'air, qui sont disposés par rapport à la position suspendue du dispositif de compresseur pendant le fonctionnement, de telle manière que l'eau de pluie ne puisse pas pénétrer dans le boîtier, dans lequel les trous d'entrée et de sortie d'air sont disposés de préférence latéralement à ou en dessous de la face de commande.

8. Dispositif de compresseur selon l'une quelconque des revendications 1 à 7, dans lequel l'orientation prête à fonctionner est garantie sans le recours à des pieds de soutien.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7789112 B1
- EP 1914062 A1